# EUROPEAN PATENT SPECIFICATION

(11) **EP 3 788 916 B1**
(45) Date of publication and mention of the grant of the patent: **01.02.2023**
(21) Application number: 20194276.0
(22) Date of filing: 03.09.2020
(51) Int. Cl.: A47J 31/36, A47J 31/46

(54) **MACHINE FOR THE PREPARATION OF BEVERAGES**
MASCHINE ZUR ZUBEREITUNG VON GETRÄNKEN
MACHINE DE PRÉPARATION DE BOISSONS

(30) Priority: 06.09.2019 IT 201900015755
(43) Date of publication of application: 10.03.2021
(73) Proprietor: BARDAZZI, Bruno, 50059 Vinci FI (IT)
(72) Inventor: BARDAZZI, Bruno, 50059 Vinci FI (IT)
(74) Representative: Leucci, Lidia

(56) References cited:
- WO-A1-2011/067264
- WO-A1-2011/147796
- WO-A1-2017/005376

## Description

The present invention relates to machines for the preparation of beverages which involve the use of prepackaged charges of edible material. In particular, it relates to a machine in which the infusion unit comprises an infusion chamber, intended to accommodate the prepackaged charge, which chamber is formed by two complementary portions, movable with respect to each other, provided with releasable coupling means and guiding means of relative movement.

In the last twenty-five years, the evolution of technology in the sector of machines for the preparation of beverages, and in particular in that of coffee machines, has highlighted one aspect in particular, among others, relating to the use of machines by the user: that is, the preference of an appliance in which the pre-packaged charge could be inserted into a machine without removable parts, except for occasional cleaning treatments, and, in direct alternative, that the pre-packaged charge was ejected automatically or semi automatically at the end of the production of the desired beverage. Consequently, numerous apparatuses have been developed in which the infusion group, understood as the part of the machine into which the infusion liquid is fed, generally hot water under a given pressure, and in which the beverage to be dispensed is prepared, by extraction or dissolution of a particulate edible material, comprises an infusion chamber formed by two mutually complementary portions suitable, once coupled, to receive the prepackaged charge of edible material. The two portions, which include both the means for feeding the infusion liquid and the dispensing means for the prepared beverage, are provided with movement relative to each other, the movement is suitably guided, and releasable means for coupling are provided between the two portions. Upon separation of the two portions following the production of the beverage, the spent prepackaged charge is expelled, preferably automatically.

The structure, the positioning and the movements of the infusion group in the machines of the type described above therefore derive from the desire to provide a machine that is on the one hand capable of making the beverage in the most correct operating conditions, and which on the other hand is capable of automatically removing the exhausted prepackaged charge.

Numerous and different approaches to this problem are known to the state of the art, with solutions that appear more or less brilliant. For example, documents such as WO2007031378, of which the present applicant is the inventor, EP1495702, EP2717749, EP3053490, EP2858538, as well as many others could be mentioned. The most relevant functional considerations that can be made on all these devices are based on the fact that they strongly depend on the structural characteristics of the prepackaged charge with which they are intended to cooperate. Consequently, the prepackaged charges of the more rigid materials can be expelled from the infusion unit by acting on the protruding radial flange with which they are normally provided, while this type of expulsion is more difficult if the material of the container body has a lower consistency; in this case, means will be preferred which push the container body of the exhausted prepackaged charge out of the infusion chamber.

In all cases, the movements that are made to carry out the two portions of the infusion chamber are aimed at both favoring the optimal coupling of the two portions and facilitating the expulsion of the exhausted charge. These are generally rather complex movements, which consequently complicate the structure of the brewing unit, and consequently make the machine itself more complex, and often even more cumbersome.

Document WO2017005376 describes a machine for the production of beverages in which the two portions of the infusion chamber are approached and separated from each other by virtue of the action of a hydraulic piston connected to the pressurized water supply circuit, in an alternative way with respect to the water that feeds the heat exchanger; there are several valves to control the supply to the hydraulic piston and the heat exchanger. A similar solution is described in WO2011147796.

These two solutions, although they allow exploitation of the pressurized water circuit in the movement of the portions of the infusion chamber, make the control and management of the operation of the machine very complex, which requires several electrovalves.

Another significant problem is related to the automatic ejection of the exhausted prepackaged charge. In fact, in beverage infusion systems currently available for domestic use, the expulsion of the exhausted prepackaged charge occurs in conjunction with the release of the coupling between the two portions of the infusion group; this occurs automatically in those machines which are equipped with electromechanical actuators with a generally complex and relatively expensive structure, which requires equally complex control logics. The great majority of machines, equipped with manual operation, present the real risk that the last charge inserted in the brewing group remains in the brewing chamber until the next preparation, which can take place even a few days later, with consequent development of molds and encrustations inside the brewing chamber. This aspect, combined with the recent development of biodegradable materials for the construction of the container body of the prepackaged fillers, makes it urgent to develop systems capable of automatically expelling the exhausted fillers, without however the construction and manufacturing problems of the state of the art.

The aim of the present invention is therefore to provide a machine for preparing beverages of the type described above, provided with an infusion unit in which the relative movement of the two portions of the infusion chamber and their mutual coupling is carried out in a simple way both from a structural and a functional point of view, so as to allow the automatic release of the coupling between the aforementioned portions; consequently, the purpose of the invention is a machine that uses the pressurized water supply circuit to move the two portions of the infusion chamber without incurring in complex and costly structural and functional reorganizations of the machine itself.

The object of the present invention is therefore a machine for preparing beverages, comprising a tank, a feed pump, a heat exchanger and provided with an infusion unit comprising an infusion chamber, equipped with means for feeding the infusion liquid and means for dispensing the prepared beverage, formed by two mutually complementary portions and suitable, once coupled, to receive a pre-packaged charge of edible material, in which the two portions of said infusion chamber are provided with relative movement to each other with respect to the other, and the movement is suitably guided, and means for coupling the two releasable portions are provided; said two portions of said infusion chamber are one mobile and one fixed, said mobile portion being equipped with drive means comprising a hydraulic jack mechanically coupled to said mobile portion, and inserted in the circuit for feeding pressurized water to the infusion chamber, and releasable locking means being provided for the coupling between said two portions of the infusion chamber; said jack is inserted in the pressurized water supply circuit downstream of the pump, upstream of the boiler and in series with it; the jack is able to act as a valve for distributing the pressurized liquid fed by the pump, being provided with a duct which opens radially from the cylinder of said jack, and communicates with the boiler of the machine. Furthermore, an analogous duct communicating with the tank of the machine can be provided.

In a preferred embodiment, said coupling locking means comprise two rack guides mounted to the sides of the brewing unit, and suitable for cooperating with the toothed wheels coupled with a crosspiece which carries said movable portion of the brewing chamber, and which is in turn coupled to said jack.

In another executive variant, said locking means comprise a toggle joint, provided with appropriate guides arranged on the sides of the infusion unit, and coupled at the opposite end to said jack.

Advantageously, the mobile portion of the infusion chamber is the one that comprises the means for feeding the hot water under pressure. Said movable portion can comprise a compensating piston fed through said boiler, and able to optimize the seal of the infusion chamber, and in fluid communication with the pressurized hot water supply means.

Furthermore, the fixed portion of the infusion chamber can be provided with means for expelling the exhausted prepackaged charge, mechanically coupled to said mobile portion. Said expulsion means preferably comprise a wall having dimensions substantially equal to those of the bottom wall of the fixed portion of said infusion chamber, and provided with actuator means and with a plurality of through openings.

The machine may be provided with an infusion unit comprising two portions, in which one portion has a cavity tapered from the outside towards the inside and the other portion has at least one protruding annular relief complementary to said cavity, in so as to mint the pre-packaged charge, which in this case is provided with a deformable container body inside the aforementioned tapered cavity.

Further advantages and characteristics of the machine according to the present invention will become evident from the detailed description of some embodiments thereof, given, by way of non-limiting example, with reference to the attached drawings, in which:
Figure 1 is a schematic diagram with parts in longitudinal section of a first embodiment of the machine according to the present invention;
Figure 2 is a schematic diagram similar to Figure 1, relating to an executive variant of the present invention;
Figure 3 is a cross-sectional view of a detail of the embodiment illustrated in Figure 1;
Figures 4A and 4B show an enlarged detail of Figure 1, in two different operating conditions;
Figures 5A and 5B show an enlarged detail of Figure 1, in two different operating conditions;
Figures 6A and 6B show an enlarged detail of Figure 2, in two different operating conditions.

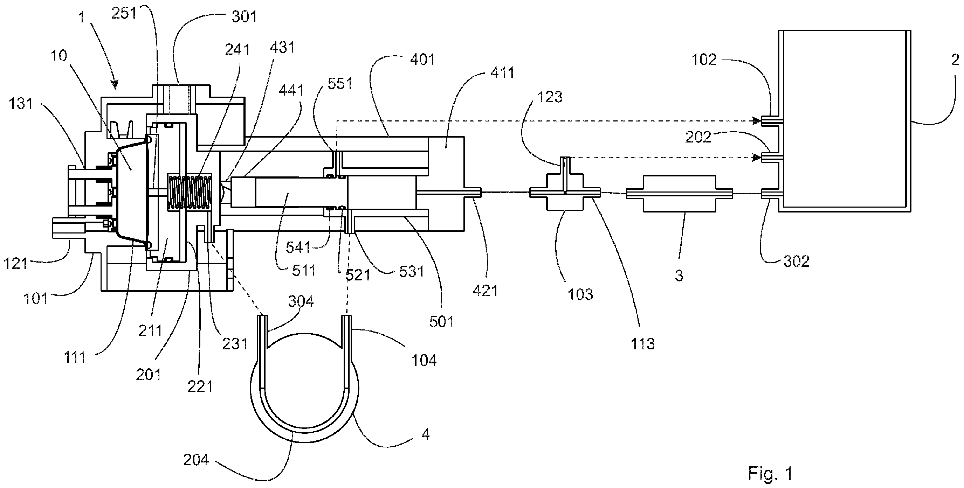

Figure 1 schematically illustrates a first embodiment of the machine according to the present invention; 1 designates the brewing group. This group comprises a fixed portion 101, in which a cavity 111 is formed for housing the pre-packaged charge 10, introduced into the infusion group through the opening 301, said cavity 111 being in communication with the beverage dispensing duct 121, and provided means 131 for expelling the prepackaged charge. The movable portion 201 comprises a compensating piston 211 housed in a compensation chamber 221, fed by the duct 231 in communication with the discharge duct 304 of the boiler 4, better described hereinafter. The compensator piston 211 cooperates with the spring 241 and is provided with the duct 251 for supplying the hot water under pressure from the boiler 4.

The end of the movable portion 201 of the infusion unit 1 is connected, in a better described and illustrated way below, with the crosspiece 441 movable in the guide 431 of the frame 401. Said frame has, at the end opposite to that in which it is located the mobile portion 201, a block 411, in which a conduit 421 is formed, communicating, through the solenoid valve 103, with the pump 3 which feeds water from the conduit 302 of the tank 2. The conduit 421 pours the water into the cylinder 501, in which the piston 511 is slidably arranged, coupled at the opposite end with said crosspiece 441. The cylinder 501 has two radial exhaust ducts; the duct 531 puts the water at the disposal of the heat exchanger 4 and its heating coil 204, communicating with the supply duct 104 of the boiler itself. The pipe 551 allows the discharge of the water coming from the same boiler to the return pipe 102 of the tank 2, in the way better described and illustrated below. The solenoid valve 103 is three-way; one way 113 allows the supply through the pump 3 and the delivery duct 302 of the tank 2, and the other way 123 allows the discharge to the return duct 202 of the tank 2, while the third way is the one that communicates with the pump 3.

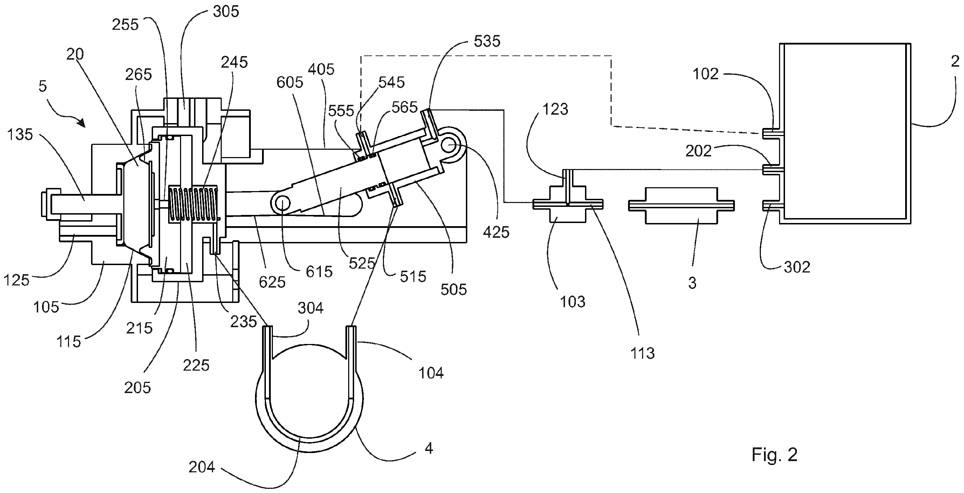

Figure 2 illustrates an executive variant of the machine according to the present invention. Equal parts correspond to equal numerals. The infusion group 5 is in the infusion phase of a prepackaged charge 20, of the type whose container body is made of deformable material, and has been introduced through the opening 305. The infusion group comprises a fixed portion 105 provided with a cavity 115, on the bottom of which there are means 135 for expelling the exhausted charge and communicating with the infusion delivery duct 125. The movable portion 205 of the infusion unit 5 comprises a compensating piston 215 arranged in a compensation chamber 225 which houses the spring 245 and which communicates, through the duct 235 with the heat exchanger 4, and with the duct 255 formed in the piston 215 with the cavity 115 of the fixed portion 105. The end of the piston 215 facing the cavity 115 has an annular relief 265 with a substantially V-shaped section which allows the pre-packaged charge 20 to be conveniently compressed inside the cavity 115.

The frame 405 of the infusion unit is provided, at the opposite end to that facing the two portions 105 and 205, with a pin 425 to which is pivotally coupled the cylinder 505, fed through the duct 535 and provided with a radial discharge 515 in communication with the supply duct 104 of the boiler 4, and a radial exhaust 545 in communication with the inlet 102 of the tank 2. The piston 525 slides tightly in the cylinder 505, thanks to the gasket 565 arranged on the same piston and to the gasket 555 in head to cylinder 505. The end of the piston 525 opposite the one provided with gasket is connected to the pin 615 which connects the arms 605 and 625 of a toggle mechanism, better illustrated and described below.

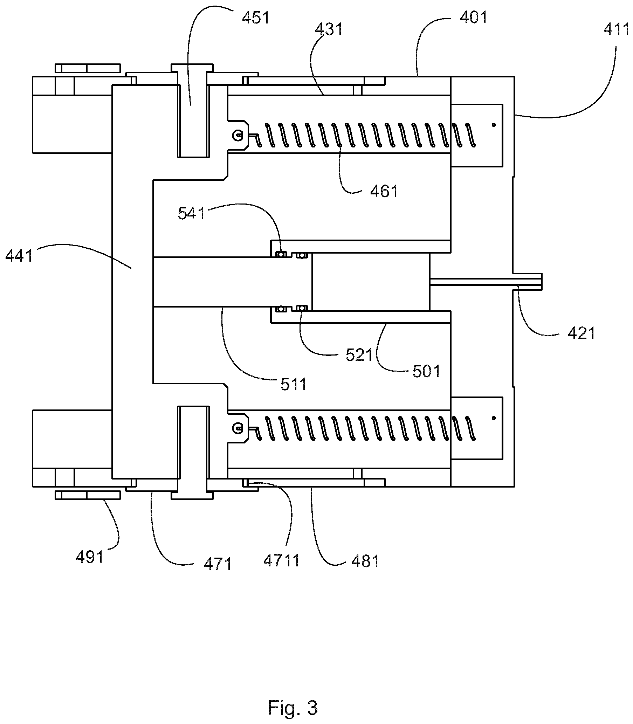

Figure 3 illustrates, in partial transverse section, the machine according to the embodiment illustrated in Figure 1; equal parts correspond to equal numerals. The figure shows the presence of the return springs 461 which cooperate with the crosspiece 441 coupled to the piston 511. On both sides of the frame 401 are inserted, cooperating with the guides 481, the toothed wheels 471, provided with the teeth 4711, pivotally connected to the crosspiece 441 thanks to the pin 451, and connected to a respective arm 491, as better illustrated in other figures and described further on.

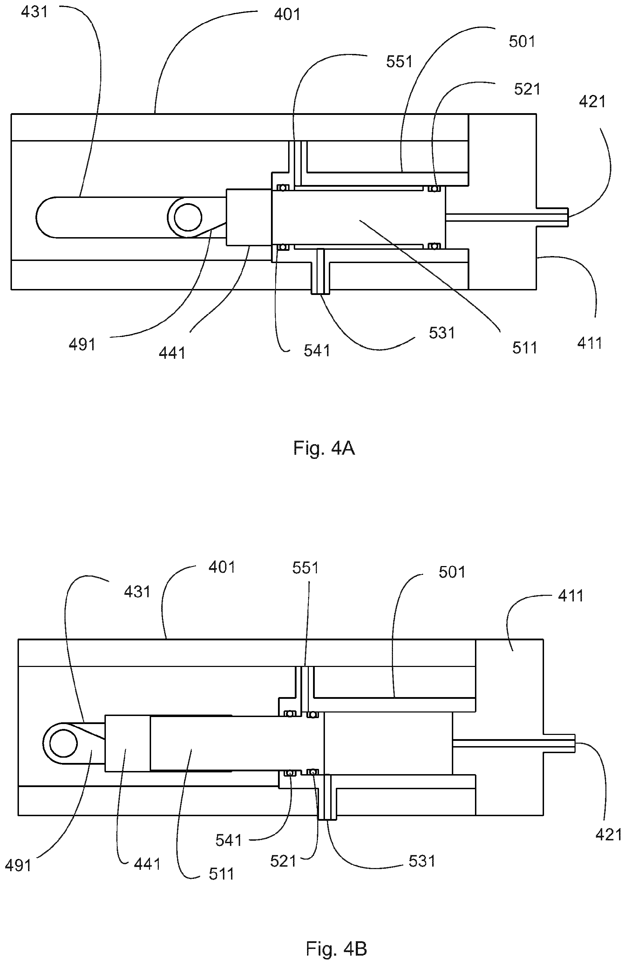

Figure 4A shows an enlarged detail of the embodiment of figure 1, in the condition prior to dispensing the infusion; also in this case the equal parts correspond to the same numerals. The figure shows the position of the arm 491 in the guide 431, in addition to the detail of the arrangement of the seals 541 of the cylinder 501 and 521 of the piston 511. In this phase the ducts 531 and 551 are in communication with each other. Figure 4B illustrates the infusion delivery condition; in this case the duct 531 is in communication with the water supply duct 421 connected to the pump (see figure 1).

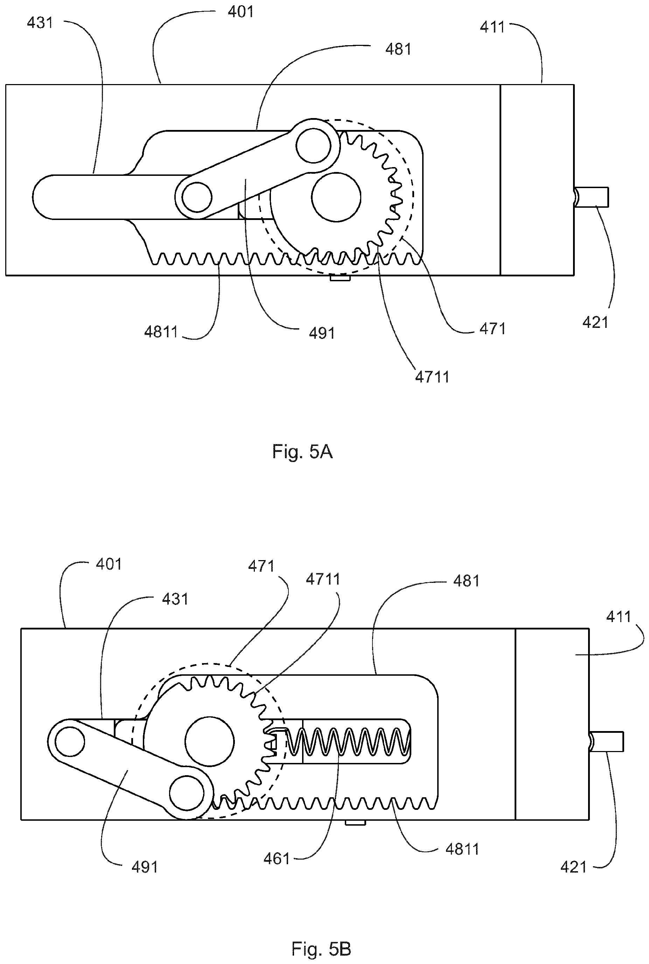

Figure 5A shows a side elevation view of the same detail of Figure 4A; equal parts correspond to equal numerals. The figure shows the eccentric connection between the arm 491 and the wheel 471, dashed in the figure, which has a toothed portion 4711 on the face facing inwards, suitable for cooperating with the toothed rack portion 4811 of the guide 481. In the figure 5B illustrates the situation during the dispensing of the beverage, with the arm 491 acting as a block with respect to the movement of the toothed wheel 471.

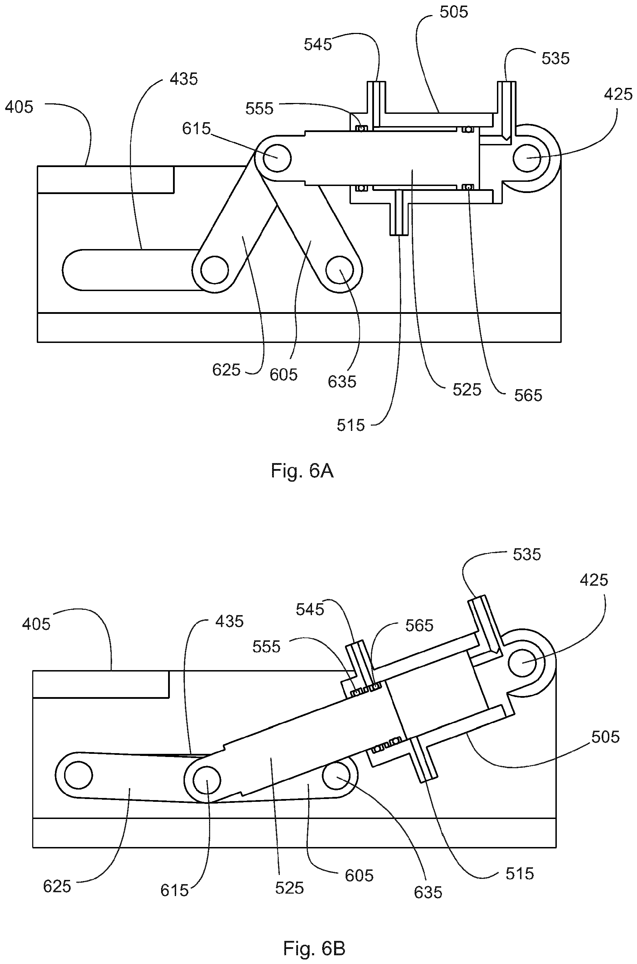

Figure 6A shows a longitudinal section detail of the machine of Figure 2, in the situation prior to dispensing the drink; equal parts correspond to equal numerals. In the figure we can see the arms 605 and 625, hinged at 615 at the end of the piston 525, with the free end of the arm 625 sliding in the guide 435, while the connecting rod 605 is pivoted at 635 to the frame 405. In figure 6B the same detail is shown, in this case in the beverage dispensing condition; you can see both the blocking condition determined by the extension of the piston 525, which pushes the arm 625 at the end of the guide 435, and the fluid connection between the supply pipe 545 of the cylinder 505 and the supply pipe 515 of the boiler.

The operation and structure of the machine according to the present invention will appear evident from the following. As mentioned in the introduction, the machine according to the invention aims to provide an operation automation system, which has a simple structure and can be easily integrated into machines of current design. The jack used exploits the pressure of the water supplied by the pump, using a very small volume, and can act, as in the cases illustrated in figures 1 and 2, as a pressure water distribution valve, since the displacement of the piston uncovers at the end of its stroke the pipe that communicates with the boiler of the machine.

In the phase following the dispensing of the beverage, when the pump stops the supply of pressurized water, in the case of the machine of figures 1 and 2, the three-way solenoid valve directs the flow towards the tank 2, and consequently the cylinder of the jack empties, and the seal on the piston allows fluid communication between the cylinder duct connected to the boiler 4 and the cylinder duct connected to the tank 2. Consequently, the piston drags the mobile portion of the brewing chamber with it, releasing the charge exhausted, which is expelled from the fixed portion by means of suitable expulsion means, preferably of the type described above.

The locking means for the coupling of the two portions of the brewing chamber can be, as can be seen from the embodiment illustrated in Figures 1, 3, 4A, 4B, 5A and 5B of the mechanical type, and comprise a toothed wheel provided with an eccentric arm having at its distal end a pin which cooperates with a guide formed in the frame of the brewing unit; this locking effectively prevents any possible return of the jack piston, and avoids the introduction of a means of control such as a solenoid valve. A completely analogous solution is that obtained by mounting the jack oscillating with respect to the frame of the brewing unit, as shown in the embodiment of figures 2, 6A and 6B, and connecting the free end of the piston to a toggle joint which locks at the end of the stroke of said piston, passing the point of maximum extension as illustrated in Figure 6B.

Advantageously, the infusion chamber provides, in the event that the machine is dedicated to the use of prepackaged charges formed with the container body made of a flexible material, a characteristic structure that ensures the best operating efficiency of the aforementioned charge. In fact, while a portion, in the case illustrated in Figure 2 the fixed portion, of the brewing chamber provides a truncated conical cavity with the smaller base corresponding to the bottom wall, the other portion is provided with an annular relief complementary to the shape of the cavity of the said fixed portion, which allows the prepackaged charge to be deformed to adapt it to the shape of the cavity. This allows the use of prepackaged deformable charges, the so-called pods, without their actual volume variations affecting the infusion negatively. In fact, there are numerous producers on the market, and not all pods are identical to each other both in terms of size and weight, so an exact and static coupling does not always manage to be the optimal one for a good coffee execution.

## Claims

1. Beverage preparation machine, comprising a tank (2), a feed pump (3), a heat exchanger (4), and provided with an infusion unit (1; 5) comprising an infusion chamber (101, 201; 105, 205), equipped with means for feeding the infusion liquid (251; 255) and dispensing means for the prepared drink (121; 125), formed by two complementary portions and suitable, once coupled, for receiving a prepackaged charge of edible material, in which the two portions of said infusion chamber are provided with movement relative to each other, and the movement is suitably guided, and means for coupling between the two portions are provided, releasable ; said two portions of said infusion chamber are one movable (201; 205) and one fixed (101; 105), being said movable portion (201; 205) equipped with actuation means comprising a hydraulic jack (501; 505) mechanically coupled to said movable portion (201; 205), and inserted in the circuit for feeding pressurized water to the infusion chamber, and releasable locking means being provided (481, 431, 491, 471; 435, 605, 625) of the coupling between said two portions of the infusion chamber, in which said jack (501; 505) is inserted in the pressurized water supply circuit downstream of the pump (3), upstream of the heat exchanger (4) and in series with it, **characterized in that** the said jack (501; 505) is able to act as a distribution valve for the pressurized liquid fed by the pump, being provided with a duct (531; 515) which opens radially from the cylinder (501; 505) of said jack, and communicates with the heat exchanger (4) of the machine.

2. Machine according to claim 1, wherein said jack (501; 505) has a diameter significantly smaller than that of the infusion chamber (101, 201; 105, 205).

3. Machine according to claim 1 or 2, in which a duct (551; 545) is provided which departs from said cylinder communicating with the tank (2) of the machine.

4. Machine according to any one of the preceding claims 1 to 3, in which said locking means of the coupling between the said portions of the infusion chamber comprise two rack guides (481) mounted on the sides of the brewing unit, and suitable for cooperating with two toothed wheels (471) associated with the cross member (441) which carries said movable portion (201) of the infusion chamber, and which is coupled to said jack (501).

5. Machine according to any one of the preceding claims 1 to 3, in which said locking means of the coupling between the said portions of the infusion chamber comprise a toggle joint (605, 625), provided with suitable guides (435) arranged at the sides of the infusion unit, and coupled (615) to said jack.

6. Machine according to any one of the preceding claims from 1 to 5, in which the movable portion (201; 205) of the infusion chamber is the one that includes the feeding means (251; 255) of the hot water under pressure.

7. Machine according to claim 6, wherein said movable portion comprises a compensating piston (211; 215) fed through said heat exchanger (4), and capable of optimizing the seal of the infusion chamber, and in fluid communication with the feeding means (251; 255) of the hot water under pressure.

8. Machine according to any one of the preceding claims from 1 to 7, in which the fixed portion (101; 105) of the infusion chamber is provided with means for expelling (131; 135) the exhausted prepackaged charge, mechanically coupled to said mobile portion (201 ; 205).

## Patentansprüche

1. Getränkezubereitungsmaschine, die einen Tank (2), eine Zuführungspumpe (3) und einen Wärmetauscher (4) umfasst und mit einer Brüheinheit (1; 5) versehen ist, die eine Aufgusskammer (101, 201; 105, 205) umfasst, die mit Mitteln zur Zuführung der Aufgussflüssigkeit (251; 255) und Mitteln zur Ausgabe des zubereiteten Getränks (121; 125) ausgestattet ist, die Brühkammer aus zwei komplementären Teilen gebildet ist und, wenn sie gekoppelt ist, geeignet ist, eine vorverpackte Charge eines essbaren Materials aufzunehmen, wobei die beiden Teile der Aufgusskammer mit einer Bewegung relativ zueinander versehen sind und die Bewegung in geeigneter Weise geführt wird, und Mittel zur Kopplung zwischen den beiden Teilen vorgesehen sind, die lösbar sind; wobei die beiden Teile der ein beweglicher (201; 205) und ein fester (101; 105) sind, wobei der bewegliche Teil (201; 205) mit Betätigungsmitteln ausgestattet ist, die einen hydraulischen Zylinder (501; 505) umfassen, der mechanisch mit dem beweglichen Teil (201; 205) gekoppelt ist und in den Kreislauf zum Zuführen von unter Druck stehendem Wasser in die Infusionskammer eingesetzt ist, und wobei lösbare Verriegelungsmittel (481, 431, 491, 471; 435, 605, 625) der Kopplung zwischen den beiden Teilen der Infusionskammer vorgesehen sind, in denen der Zylinder (501; 505) in den Druckwasserversorgungskreislauf stromabwärts der Pumpe (3), stromaufwärts des Wärmetauschers (4) und in Reihe mit diesem eingefügt ist, **dadurch gekennzeichnet, daß** der Zylinder (501; 505) in der Lage ist, als Verteilungsventil für die von der Pumpe zugeführte Druckflüssigkeit zu wirken, wobei er mit einer Leitung (531; 515) versehen ist, die radial vom Zylinder (501; 505) des Zylinders ausgeht und mit dem Wärmetauscher (4) der Maschine in Verbindung steht.

2. Maschine nach Anspruch 1, wobei der Zylinder (501; 505) einen Durchmesser hat, der deutlich kleiner ist als der der Brühkammer (101, 201; 105, 205).

3. Maschine nach Anspruch 1 oder 2, bei der eine Leitung (551; 545) vorgesehen ist, die von dem Zylinder ausgeht und mit dem Tank (2) der Maschine in Verbindung steht.

4. Maschine nach einem der vorhergehenden Ansprüche 1 bis 3, bei der die Mittel zur Verriegelung der Kopplung zwischen den Teilen der Brühkammer zwei Zahnstangenführungen (481) umfassen, die an den Seiten der Brüheinheit angebracht und geeignet sind, mit zwei Zahnrädern (471) zusammenzuwirken, die mit dem Querträger (441) verbunden sind, der den beweglichen Teil (201) der Brühkammer trägt und der mit dem Zylinder (501) verbunden ist.

5. Maschine nach einem der vorhergehenden Ansprüche 1 bis 3, bei der die Verriegelungsmittel der Kopplung zwischen den Teilen der Brühkammer ein Kniehebelgelenk (605, 625) umfassen, das mit geeigneten Führungen (435) versehen ist, die an den Seiten der Brüheinheit angeordnet und mit dem Zylinder gekoppelt (615) sind.

6. Maschine nach einem der vorhergehenden Ansprüche 1 bis 5, bei der der bewegliche Teil (201; 205) der Brühkammer derjenige ist, der die Zuführungsmittel (251; 255) für das unter Druck stehende heiße Wasser enthält.

7. Maschine nach Anspruch 6, **dadurch gekennzeichnet, dass** der bewegliche Teil einen Ausgleichskolben (211; 215) umfasst, der durch den Wärmetauscher (4) geführt wird und in der Lage ist, die Abdichtung der Brühkammer zu optimieren, und der in Fluidverbindung mit den Zuführungsmitteln (251; 255) für das heiße Wasser unter Druck steht.

8. Maschine nach einem der vorhergehenden Ansprüche 1 bis 7, bei der der feste Teil (101; 105) der Brühkammer mit Mitteln zum Ausstoßen (131; 135) der verbrauchten vorverpackten Charge versehen ist, die mechanisch mit dem beweglichen Teil (201; 205) gekoppelt sind.

## Revendications

1. Machine de préparation de boissons, comprenant un réservoir (2), une pompe d'alimentation (3), un échangeur de chaleur (4), et pourvue d'une unité d'infusion (1 ; 5) comprenant une chambre d'infusion (101, 201 ; 105, 205), équipée de moyens pour alimenter le liquide d'infusion (251 ; 255) et de moyens de distribution de la boisson préparée (121 ; 125), formée par deux parties complémentaires et appropriée, une fois couplée, pour recevoir une charge préemballée de matériau comestible, dans laquelle les deux parties de ladite chambre d'infusion sont prévues avec un mouvement l'une par rapport à l'autre, et le mouvement est guidé de manière appropriée, et des moyens pour le couplage entre les deux parties sont prévus, libérables ; lesdites deux parties de ladite chambre d'infusion sont une partie mobile (201 ; 205) et une partie fixe (101 ; 105), étant ladite partie mobile (201 ; 205) équipée de moyens d'actionnement comprenant un vérin hydraulique (501 ; 505) couplé mécaniquement à ladite partie mobile (201 ; 205), et inséré dans le circuit d'alimentation en eau sous pression de la chambre d'infusion, et des moyens de verrouillage libérables étant prévus (481, 431, 491, 471 ; 435, 605, 625) de le couplage entre lesdites deux parties de la chambre d'infusion, dans lesquels ledit vérin (501 ; 505) est inséré dans le circuit d'alimentation en eau sous pression en aval de la pompe (3), en amont de l'échangeur de chaleur (4) et en série avec celui-ci, **caractérisé en ce que** ledit vérin (501 ; 505) est capable d'agir comme une soupape de distribution pour le liquide sous pression alimenté par la pompe, étant muni d'un conduit (531 ; 515) qui s'ouvre radialement à partir du cylindre (501 ; 505) dudit vérin, et communique avec l'échangeur de chaleur (4) de la machine.

2. Machine selon la revendication 1, dans laquelle ledit vérin (501; 505) a un diamètre significativement plus petit que celui de la chambre d'infusion (101, 201 ; 105, 205).

3. Machine selon la revendication 1 ou 2, dans laquelle il est prévu un conduit (551; 545) partant dudit vérin et communiquant avec le réservoir (2) de la machine.

4. Machine selon l'une quelconque des revendications précédentes 1 à 3, dans laquelle lesdits moyens de verrouillage de l'accouplement entre lesdites parties de la chambre d'infusion comprennent deux guides à crémaillère (481) montés sur les côtés de l'unité d'infusion, et aptes à coopérer avec deux roues dentées (471) associées à la traverse (441) qui porte ladite partie mobile (201) de la chambre d'infusion, et qui est accouplée audit vérin (501).

5. Machine selon l'une quelconque des revendications précédentes 1 à 3, dans laquelle lesdits moyens de verrouillage de l'accouplement entre lesdites parties de la chambre d'infusion comprennent un joint à genouillère (605, 625), muni de guides appropriés (435) disposés sur les côtés de l'unité d'infusion, et couplé (615) audit vérin.

6. Machine selon l'une quelconque des revendications précédentes de 1 à 5, dans laquelle la partie mobile (201; 205) de la chambre d'infusion est celle qui comprend les moyens d'alimentation (251; 255) de l'eau chaude sous pression.

7. Machine selon la revendication 6, dans laquelle ladite partie mobile comprend un piston de compensation (211; 215) alimenté par ledit échangeur de chaleur (4), et capable d'optimiser l'étanchéité de la chambre d'infusion, et en communication fluidique avec les moyens d'alimentation (251; 255) de l'eau chaude sous pression.

8. Machine selon l'une quelconque des revendications précédentes de 1 à 7, dans laquelle la partie fixe (101 ; 105) de la chambre d'infusion est munie de moyens d'expulsion (131 ; 135) de la charge préemballée épuisée, couplés mécaniquement à ladite partie mobile (201; 205).
